# FASCICULE DE BREVET EUROPEEN

(11) **EP 2 104 242 B1**
(45) Date de publication et mention de la délivrance du brevet: **16.05.2012**
(21) Numéro de dépôt: 09154586.3
(22) Date de dépôt: 09.03.2009
(51) Int. Cl.: H04B 7/185

(54) **Réseau de télécommunication**
Fernübertragungsnetz
Telecommunication network

(30) Priorité: 17.03.2008 FR 0851723
(43) Date de publication de la demande: 23.09.2009
(73) Titulaire: Eutelsat SA, 75015 Paris (FR)
(72) Inventeur: Fenech, Hector, 92130 Issy Les Moulineaux (FR); Lance, Emmanuel, 92110 Clichy (FR)
(74) Mandataire: Lebkiri, Alexandre

(56) Documents cités:
- EP-A- 0 944 183
- EP-A- 1 267 502
- WO-A-02/47357

## Description

La présente invention concerne un réseau de télécommunication pour l'établissement de liaisons radiofréquences entre des stations terrestres et des terminaux terrestres via un satellite de télécommunication multifaisceaux. Ce type de satellite permet l'utilisation de plusieurs faisceaux d'antennes à bord du satellite pour couvrir des zones géographiques contiguës ou cellules, au lieu d'un seul faisceau large.

De tels satellites multifaisceaux permettent d'établir plusieurs liaisons radiofréquences occupant une même bande de fréquence sur des faisceaux différents.

Dans le cas de système de télécommunication satellitaire large bande (« broadband » en anglais) à haut débit, le satellite est utilisé de façon bidirectionnelle, c'est-à-dire à la fois pour :
- relayer des données émises par une station terrestre principale (reliée au réseau terrestre) vers une pluralité de terminaux terrestres : cette première liaison de type point à multipoints constitue la voie aller (« forward link » en anglais) ;
- relayer vers la station terrestre principale les données émises par les terminaux terrestres : cette deuxième liaison, de type multipoints à point, constitue la voie retour (« return link » en anglais).

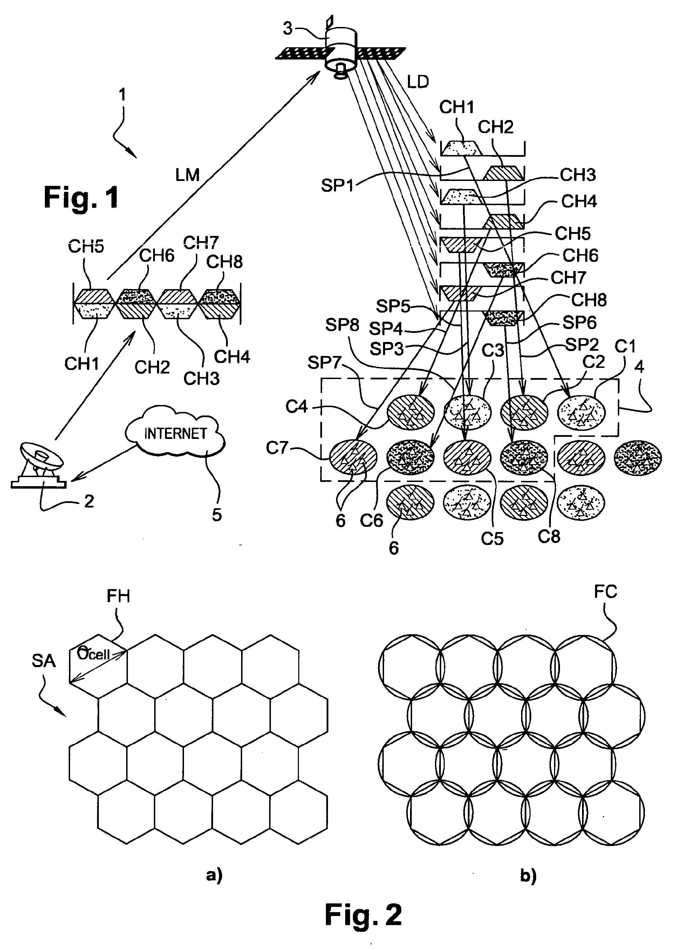

Un exemple de voie aller dans une configuration de réseau de télécommunication multifaisceaux est illustré en figure 1.

Des signaux sont envoyés vers un satellite multifaisceaux 3 sur une liaison montante LM par une station terrestre principale 2 (également appelée station centrale) telle qu'une passerelle de communication terrestre (« gateway » en anglais) reliée à une dorsale Internet 5. La station terrestre principale contrôle le réseau par le biais d'un système de gestion du réseau qui permet à l'exploitant de surveiller et de contrôler tous les composants du réseau. Les signaux envoyés par la station terrestre principale sont ensuite traités au niveau du satellite 3 qui les amplifie, les dérive à une fréquence généralement inférieure puis les retransmet à partir de la ou des antennes satellitaires sur une liaison descendante LD sous la forme d'une pluralité de faisceaux ou spots formant des zones de couvertures élémentaires ou cellules C1 à C8 dans lesquels sont situés des terminaux terrestres 6. Chaque cellule C1 à C8 est associée à un faisceau SP1 à SP8. On notera que, dans le cas de la configuration 1, les huit cellules C1 à C8 associées respectivement aux huit faisceaux SP1 à SP8 forment un groupe de cellules servies par la même station terrestre 2. La voie retour des terminaux terrestres 6 vers la station terrestre 2 fonctionne de manière identique avec une direction de communication inverse.

La coordination des fréquences entre opérateurs se fait dans le cadre d'une règlementation édictée par l'Union Internationale des Télécommunications (IUT) : ainsi, à titre d'exemple, la bande Ka pour la région 1 (Europe, Afrique, Moyen-Orient) est définie dans le tableau 1 ci-dessous :

**Tableau 1.**

| | | |
|---|---|---|
| Voie aller | Liaison montante (de la station terrestre) | 27.5 GHz à 29.5 GHz |
| | Liaison descendante (vers les terminaux terrestres) | 19.7 GHz à 20.2 GHz |
| Voie retour | Liaison montante (des terminaux terrestres) | 29.5 GHz à 30.0 GHz |
| | Liaison descendante (vers la station terrestre) | 17.7 GHz à 19.7 GHz |

On constate que les spectres de la bande Ka en liaison montante sont adjacents (i.e. les intervalles [27.5 ; 29.5] et [29.5 ; 30] ne présentent pas de discontinuité). Il en va de même pour les spectres de la bande Ka en liaison descendante (i.e. les intervalles [17.7 ; 19.7] et [19,7 ; 20.2] ne présentent pas de discontinuité).

Etant donné que le gain d'une antenne est inversement proportionnel à l'ouverture du faisceau, il est nécessaire d'utiliser des antennes multifaisceaux pour couvrir une zone étendue avec un gain homogène et élevé. Plus le nombre de faisceaux sera grand, plus petite sera l'ouverture de chaque faisceau. Ainsi, le gain sur chaque faisceau et donc le gain sur la zone de service à couvrir sera augmenté. Comme nous l'avons mentionné plus haut, une zone de service à couvrir est formée par une pluralité de cellules contigües (zones de couvertures élémentaires), un faisceau étant associé à chaque cellule. Une zone de couverture multifaisceaux homogène SA est représentée en figure 2a), chaque cellule étant représentée par un hexagone FH de sorte que la zone de couverture est composée d'une pluralité d'hexagones FH dans laquelle θ*_{cell}* est la dimension externe de la cellule exprimée par l'angle du satellite associé à la couverture. Toutefois, le faisceau d'antenne associé à chaque cellule n'est pas capable de produire une forme hexagonale, une bonne approximation consistant à considérer une pluralité de faisceaux circulaires FC tels que représentés en figure 2 b). L'association d'un faisceau avec une cellule se fait en prenant en compte les meilleures performances du satellite pour ledit faisceau, notamment en termes de PIRE (Puissance Isotrope Rayonnée Equivalente) et de facteur de mérite G/T (rapport gain sur température de bruit) : une cellule est déterminée comme la partie de la zone de service associée au faisceau offrant le gain le plus élevé sur cette zone parmi tous les faisceaux du satellite.

La configuration 1 telle que représentée en figure 1 utilise une technique dite de réutilisation des fréquences : cette technique permet d'utiliser une même plage de fréquences plusieurs fois dans le même système satellitaire afin d'accroître la capacité totale du système sans augmenter la bande passante attribuée.

On connaît des schémas de réutilisation de fréquences, dits schémas de couleur, faisant correspondre une couleur à chacun des faisceaux du satellite. Ces schémas de couleur sont utilisés pour décrire l'attribution d'une pluralité de bandes de fréquences aux faisceaux du satellite en vue de transmissions radiofréquences à réaliser dans chacun de ces faisceaux. Dans ces schémas, chaque couleur correspond à une de ces bandes de fréquences.

Ces satellites multifaisceaux permettent par ailleurs d'émettre (et de recevoir) des transmissions polarisées : la polarisation peut être linéaire (dans ce cas les deux sens de polarisation sont respectivement horizontal et vertical) ou circulaire (dans ce cas les deux sens de polarisation sont respectivement circulaire gauche ou circulaire droit). On notera que dans l'exemple de la figure 1, la liaison montante partant de la station terrestre principale 2 utilise deux polarisations avec quatre canaux pour chaque polarisation, respectivement Ch1 à Ch4 pour la première polarisation et Ch5 à Ch8 pour la deuxième polarisation : l'utilisation de deux polarisations permet de réduire le nombre total de stations terrestres principales. Les huit canaux Ch1 à Ch8, après traitement par la charge utile du satellite 3 formeront les huit faisceaux SP1 à SP8 (un canal étant associé à un faisceau dans cet exemple).

Selon un schéma à quatre couleurs (rouge, jaune, bleu, vert) avec un spectre de fréquence de 500 MHz pour chaque polarisation, les transmissions étant polarisées dans l'un des deux sens de polarisation circulaire droit ou circulaire gauche, chaque couleur est associée à une bande de 250 MHz et un sens de polarisation.

Nous prendrons dans toute la suite de la description la convention suivante :
- la couleur rouge est représentée par des traits hachurés vers la droite ;
- la couleur jaune est représentée par des points denses ;
- la couleur bleue est représentée par des traits hachurés vers la gauche ;
- la couleur verte est représentée par des points dispersés.

Une couleur est ainsi associée à chaque faisceau du satellite (et donc une cellule) de sorte que les faisceaux d'une même « couleur» soient non adjacents : les cellules contigües correspondent donc à des couleurs différentes.

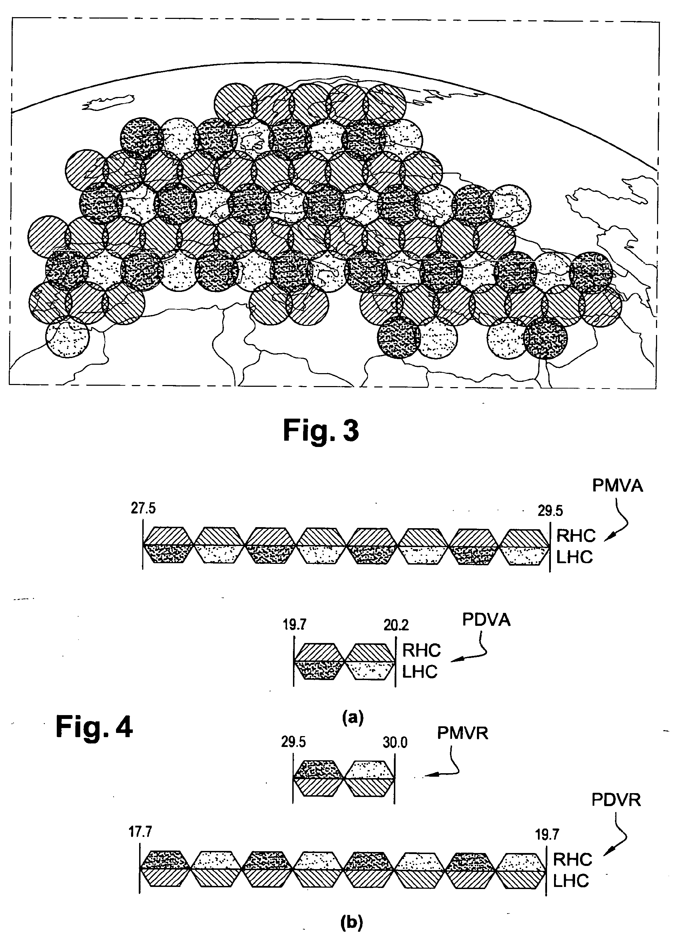

Un exemple de schéma à quatre couleurs pour la couverture de l'Europe est représenté en figure 3. Dans ce cas, 80 cellules sont nécessaires pour couvrir l'Europe.

Ce type de schéma est applicable aussi bien en liaison montante qu'en liaison descendante. Au niveau du satellite, la création d'un faisceau se fait à partir d'un cornet rayonnant vers un réflecteur. Un réflecteur peut être associé à une couleur de sorte qu'une couverture à quatre couleurs est assurée par quatre réflecteurs. En d'autres termes, la génération de 16 faisceaux de chaque station terrestre principale peut se faire via l'utilisation de quatre antennes (une par couleur) ayant chacune un réflecteur, quatre cornets étant associés à chaque réflecteur.

La figure 4 illustre un plan de fréquences décomposé en un plan de fréquences de liaison montante PMVA sur la voie aller, un plan de fréquences de liaison descendante PDVA sur la voie aller, un plan de fréquences de liaison montante PMVR sur la voie retour et un plan de fréquences de liaison descendante PDVR sur la voie retour. Les notations RHC et LHC désignent respectivement les sens circulaires droit et gauche de polarisation.

Le plan PMVA correspondant à la liaison montante sur la voie aller (de la station terrestre principale au satellite) dispose de 2 GHz (de 27.5 à 29.5 GHz) de spectre disponible en fréquence de sorte que 16 canaux de 250 MHz de bande passante sont générés par une station terrestre (8 canaux pour chaque polarisation). Ces 16 canaux, après traitement par la charge utile du satellite formeront 16 faisceaux. L'hypothèse faite ici consiste à considérer que tout le spectre de 2 GHz est utilisé : on notera toutefois qu'il est également possible, notamment pour des raisons opérationnelles, d'utiliser seulement une partie du spectre et de générer moins de canaux. Dans l'exemple ci-dessus, 16 faisceaux (et donc 16 cellules) sont générés à partir de deux signaux multiplexant les 8 canaux (un signal multiplexé par polarisation) générés par une station terrestre principale. Chaque signal multiplexé correspondant à une polarisation est ensuite traité au niveau du répéteur du satellite de façon à fournir 8 faisceaux ; chacun de ces huit faisceaux est associé à un intervalle de fréquence parmi les deux intervalles de fréquences [19.7 ; 19.95] et [19.95 ; 20.2] et à une polarisation RHC ou LHC tels que représentés sur le plan de fréquences de liaison descendante PDVA.

Le plan PDVR correspondant à la liaison descendante sur la voie retour (du satellite à la station terrestre principale) dispose de 2 GHz (de 17.7 à 19.7 GHz) de spectre disponible en fréquence de sorte que 16 faisceaux de 250 MHz de bande passante (associé à un intervalle de fréquence parmi les deux intervalles de fréquences [29.5 ; 29.75] et [29.75 ; 30] et à une polarisation RHC ou LHC tels que représentés sur le plan de fréquences de liaison descendante PMVR) issus des cellules sont multiplexés au niveau du satellite en deux signaux (correspondant à chaque polarisation) pour être renvoyés vers la station terrestre principale (8 canaux pour chaque polarisation). Nous faisons toujours l'hypothèse que l'ensemble du spectre de 2 GHz est utilisé.

On notera que le schéma à quatre couleurs, pour la voie aller, associe à chaque faisceau appartenant à un motif de quatre faisceaux adjacents, une des quatre couleurs suivantes :
- une couleur rouge correspondant à une première bande de 250 MHz (partie inférieure du spectre disponible de 500 MHz) et au sens de polarisation circulaire droit ;
- une couleur jaune correspondant à la même première bande de 250 MHz et au sens de polarisation circulaire gauche ;
- une couleur bleue correspondant à une deuxième bande de 250 MHz (partie supérieure du spectre disponible de 500 MHz) et au sens de polarisation circulaire droit ;
- une couleur verte correspondant à la même deuxième bande de 250 MHz et au sens de polarisation circulaire gauche.

Les quatre faisceaux adjacents d'un même motif sont chacun associés à une couleur différente.

Sur la voie retour, les polarisations sont inversées de sorte que les couleurs rouge et jaune ont une polarisation circulaire gauche et les couleurs bleue et verte ont une polarisation circulaire droite. Les terminaux terrestres émettent et reçoivent suivant une polarisation inverse de sorte qu'on peut aisément séparer les signaux de liaison montante des signaux de liaisons descendantes : une telle configuration permet d'utiliser des terminaux moins coûteux.

Dans le cas où les stations terrestres principales sont situées dans la zone de service, il convient de noter que les stations terrestres principales sont localisées dans des cellules et partagent ainsi avec les utilisateurs le même cornet. On désignera par la suite ces cellules particulières par le terme « cellule de station terrestre principale » (ou « gateway cell » en anglais).

Ainsi, en liaison montante, le signal émis par chaque cellule de station terrestre principale est démultiplexé par un démultiplexeur au niveau du satellite de façon à séparer le signal de la station terrestre principale du signal des terminaux terrestres.

De même, en liaison descendante, le signal émis par le satellite vers chaque cellule de station terrestre principale est multiplexé par un multiplexeur au niveau du satellite de façon à mélanger le signal destiné à la station terrestre principale et le signal destiné aux terminaux terrestres.

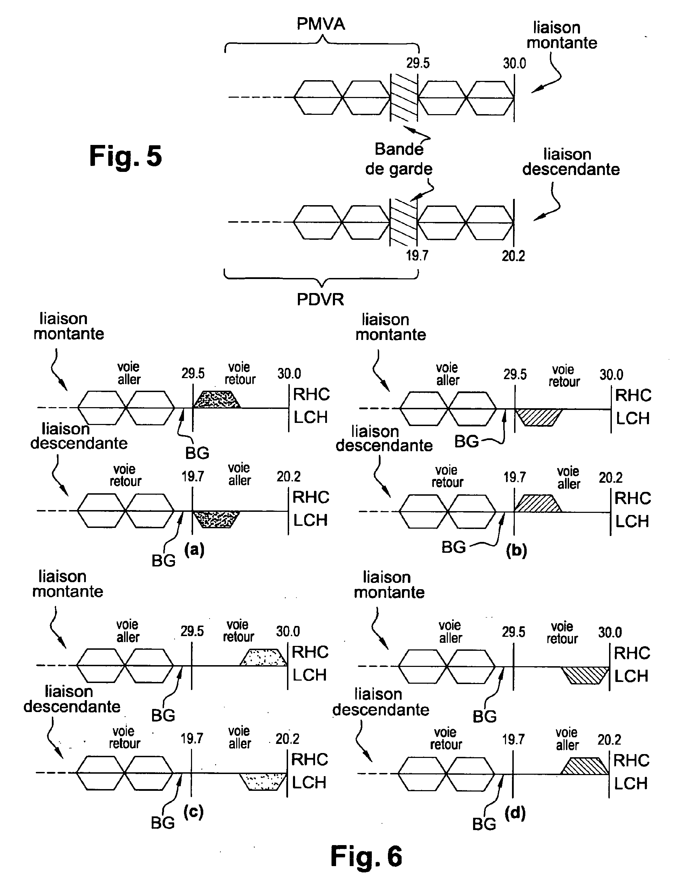

Ces opérations de multiplexage et de démultiplexage nécessitent chacune la présence d'une bande de garde en fréquence de façon à permettre la séparation ou la combinaison des signaux (le document EP1267502 décrit une telle configuration) : cette bande de garde constitue une largeur de bande de démarcation qui permet d'éviter le brouillage entre le signal de la station terrestre principale et le signal des terminaux terrestres appartenant à la même cellule de station terrestre principale, les deux opérations impliquant nécessairement une étape de filtrage qui ne peut être efficace que si les signaux sont suffisamment séparés en fréquence l'un de l'autre. La figure 5 illustre l'utilisation d'une bande de garde sur les plans de fréquences respectifs des voies descendantes et montantes. Cette bande de garde ayant typiquement une largeur de 250 MHz (valeur donnée à titre purement illustratif), se situe respectivement pour la liaison montante et la liaison descendante:
- sur le plan de fréquences PMVA correspondant à la liaison montante en voie aller (de la station terrestre principale au satellite) entre 29.25 GHz et 29.5 GHz;
- sur le plan de fréquences PDVR correspondant à la liaison descendante sur la voie retour (du satellite à la station terrestre principale) entre 19.45 GHz et 19.7 GHz.

Une telle configuration est cependant susceptible de poser quelques difficultés. En effet, le fait que la bande de garde occupe une partie du spectre (plan PMVA ou plan PDVR) entraîne une réduction du nombre de canaux par station terrestre principale et donc une réduction du nombre de faisceaux par station terrestre principale : cette réduction implique que la station terrestre principale couvre moins de cellules qu'elle ne pourrait le faire en utilisait l'ensemble du plan de fréquence. A titre d'exemple, pour une largeur de bande de garde de 250 MHz, on réduit le nombre de cellules servies par une même station émettrice de 16 à 14. Ainsi, afin de couvrir la même zone de service, une telle réduction entraîne une augmentation du nombre de stations terrestres principales.

Dans ce contexte, la présente invention vise à fournir un réseau de télécommunication pour l'établissement de liaisons radiofréquences entre des stations terrestres principales et des terminaux terrestres via un satellite de télécommunication à plusieurs faisceaux, dit satellite multifaisceaux, ledit réseau comportant des stations terrestres principales localisées dans des cellules de la zone de service sans réduction du nombre de cellules couvertes par chaque station terrestre principale.

A cette fin, l'invention propose un réseau de télécommunication pour l'établissement de liaisons radiofréquences entre des stations terrestres principales et des terminaux terrestres via un satellite de télécommunication à plusieurs faisceaux, dit satellite multifaisceaux, ledit réseau comportant :
- un satellite multifaisceaux,
- une pluralité de stations terrestres, chaque station terrestre établissant une liaison avec ledit satellite sur au moins Ns canaux de liaison correspondant à Ns intervalles de fréquences [fᵢ ; fᵢ₊₁] avec i variant de 0 à Ns-1 et,
- une zone de service composée de Nc cellules comportant chacune une pluralité de terminaux terrestres, chaque cellule étant associée à un faisceau de liaison avec ledit satellite auquel est attribué un intervalle de fréquences sélectionné parmi une pluralité d'intervalles de fréquences [f'ᵢ; ; f'ᵢ₊₁] avec i variant de 0 à N-1, N étant un entier strictement supérieur à 1, la fréquence f'₀ étant sensiblement égale à la fréquence f_{Ns}, ou la fréquence f'_{N} étant sensiblement égale à la fréquence f₀,
   chacune desdites stations terrestres principales étant localisée dans une desdites Nc cellules, ledit réseau étant caractérisé en ce que les cellules dans lesquelles sont localisées lesdites stations terrestres principales sont associées à un faisceau auquel est attribué un intervalle de fréquences sélectionné parmi les intervalles de fréquences :
- [f'ᵢ; f'ᵢ₊₁] avec i variant de 1 à N-1 dans le cas où la fréquence f'₀ est sensiblement égale à la fréquence f_{Ns}, de sorte qu'aucune station terrestre principale dudit réseau n'est localisée dans une cellule associée à un faisceau auquel est attribué l'intervalle de fréquences [f'₀ ; f'₁].
- [f'ᵢ ; f'ᵢ₊₁] avec i variant de 0 à N-2 dans le cas où la fréquence f'_{N} est sensiblement égale à la fréquence f₀, de sorte qu'aucune station terrestre principale dudit réseau n'est localisée dans une cellule associée à un faisceau auquel est attribué l'intervalle de fréquences [f'_{N-1} ; f'_{N}].

On entend par station terrestre principale (« gateway » en anglais) toute station centrale telle qu'une passerelle de communication terrestre reliée à une dorsale Internet. La station terrestre principale envoie sur une voie aller des signaux qui sont ensuite traités au niveau du satellite qui les amplifie, les dérive à une fréquence différente (généralement inférieure) puis les retransmet à partir de la ou des antennes satellitaires sur une liaison descendante sous la forme d'une pluralité de faisceaux ou spots formant des zones de couvertures élémentaires ou cellules dans lesquels sont situés des terminaux terrestres.

On notera que la différence (f'ᵢ₊₁ - f'ᵢ) correspond à la largeur de canal de liaison disponible pour les terminaux de la cellule associée.

On entend par la phrase « la fréquence f'₀ est sensiblement égale à la fréquence f_{Ns},» soit que la fréquence f'₀ est égale à la fréquence f_{Ns} soit que f'₀ = f_{Ns} + f_{B} avec f_{B} ayant une valeur positive strictement inférieure à la largeur de la bande de garde. Même si la suite de la description se focalisera davantage sur le cas où la fréquence f'₀ et la fréquence f_{Ns} sont égales, il se peut également que ces deux fréquences soient bien trop proches l'une de l'autre pour obtenir les performances souhaitées sans utiliser de bande de garde : dans ce cas, tant que la largeur de bande qui les sépare est strictement inférieure à la bande de garde (typiquement 250 MHz dans le cas de la bande Ka) nécessaire pour assurer une séparation ou une combinaison efficace des signaux, le réseau selon l'invention trouve également une application intéressante.

De même on entend par la phrase « la fréquence f'_{N} est sensiblement égale à la fréquence f₀» soit que la fréquence f'_{N} est égale à la fréquence f₀»soit que f₀ = f_{N} + f'_{B} avec f'_{B} ayant une valeur positive strictement inférieure à la largeur de la bande de garde.

L'invention trouve une application plus particulièrement intéressante dans la bande Ka : dans cette configuration, les fréquences f'₀ et f_{Ns} sont égales à 29.5 GHz. Toutefois, l'invention s'applique de façon générale lorsque les bandes allouées pour les stations terrestres principales et pour les terminaux sont adjacentes (i.e. se touchent via une fréquence commune), que la bande allouée pour les stations terrestres principales soit au dessous de la bande allouée pour les stations terrestres (cas où la fréquence f'₀ est égale à la fréquence f_{Ns}) ou au dessus (cas où la fréquence f'_{N} est égale à la fréquence fo).

En règle générale, on travaillera sur deux polarisations avec 2xNs canaux (Ns canaux par polarisation).

Grâce à l'invention, les stations terrestres principales sont localisées uniquement dans des cellules émettant ou recevant dans des intervalles de fréquences occupant la partie haute du spectre qui leur est alloué. En d'autres termes, on interdit aux stations terrestres d'occuper une cellule établissant une liaison radiofréquences dans l'intervalle [f'₀; f'₁], c'est-à-dire l'intervalle de fréquences immédiatement contigu au spectre alloué à la station terrestre principale. On utilise ainsi avantageusement cet intervalle [f'₀; f'₁] pour séparer en fréquence le signal de la station terrestre principale et le signal des terminaux terrestres appartenant à la même cellule de station terrestre principale sans avoir recours à une bande de garde. Ce faisant, on récupère les canaux normalement occupés par la bande de garde et on évite ainsi une augmentation du nombre de stations terrestres pour couvrir la zone de service.

Le réseau selon l'invention peut également présenter une ou plusieurs des caractéristiques ci-dessous, considérées individuellement ou selon toutes les combinaisons techniquement possibles :
- Chaque station terrestre établit une liaison avec ledit satellite sur 2xNs canaux de liaison, les 2xNs canaux incluant :
   o Ns canaux associés à une première polarisation et correspondant aux dits Ns intervalles de fréquences [fᵢ; fᵢ₊₁] avec i variant de 0 à Ns-1 et,
   o Ns canaux associés à une deuxième polarisation et correspondant aux dits Ns intervalles de fréquences [fᵢ ; fᵢ₊₁] avec i variant de 0 à Ns-1,
      chaque cellule étant associée à un faisceau auquel est attribuée une desdites première ou deuxième polarisation.
- Lesdits intervalles de fréquences appartiennent à la bande Ka.
- Dans le cas de liaisons montantes, d'une part entre lesdites stations terrestres principales et ledit satellite et d'autre part entre lesdites cellules et ledit satellite, les cellules dans lesquelles sont localisées lesdites stations terrestres sont associées à un faisceau auquel est attribué l'intervalle de fréquences [29.75 GHz ; 30 GHz], aucune station terrestre dudit réseau n'étant localisée dans une cellule associée à un faisceau auquel est attribué l'intervalle de fréquences [29.5 GHz ; 29.75 GHz] (dans ce cas f'₀ = f_{Ns} =29.5 GHz).
- Dans le cas de liaisons descendantes, d'une part entre lesdites stations terrestres principales et ledit satellite et d'autre part entre lesdites cellules et ledit satellite, les cellules dans lesquelles sont localisées lesdites stations terrestres sont associées à un faisceau auquel est attribué l'intervalle de fréquences [19.95 GHz ; 20.2 GHz], aucune station terrestre dudit réseau n'étant localisée dans une cellule associée à un faisceau auquel est attribué l'intervalle de fréquences [19.7 GHz ; 19.95 GHz] (dans ce cas f_{Ns} = 19.7 GHz).
- Chaque cellule est associée à une des quatre couleurs suivantes :
   o une première couleur correspondant en liaison montante à l'intervalle de fréquences [29.5 GHz ; 29.75 GHz] couplé à une première polarisation et en liaison descendante à l'intervalle de fréquences [19.7 GHz ; 19.95 GHz] couplé à une deuxième polarisation inverse de ladite première polarisation;
   o une deuxième couleur correspondant en liaison montante à l'intervalle de fréquences [29.75 GHz ; 30 GHz] couplé à ladite deuxième polarisation et en liaison descendante à l'intervalle de fréquences [19.95 GHz ; 20.2 GHz] couplé à ladite première polarisation;
   o une troisième couleur correspondant en liaison montante à l'intervalle de fréquences [29.5 GHz ; 29.75 GHz] couplé à ladite deuxième polarisation et en liaison descendante à l'intervalle de fréquences [19.7 GHz ; 19.95 GHz] couplé à ladite première polarisation;
   o une quatrième couleur correspondant en liaison montante à l'intervalle de fréquences [29.75 GHz ; 30 GHz] couplé à ladite première polarisation et en liaison descendante à l'intervalle de fréquences [19.95 GHz ; 20.2 GHz] couplé à ladite deuxième polarisation,
   les cellules dans lesquelles sont localisées lesdites stations terrestres étant uniquement des cellules de ladite deuxième ou quatrième couleur.
- Ladite première polarisation est une polarisation circulaire droite et ladite deuxième polarisation est une polarisation circulaire gauche.
- Le nombre Ns de canaux est égal à huit.
- Le nombre Ns de canaux est égal à cinq.
- L'entier N est égal à 2.

La présente invention a également pour objet un procédé pour allouer une station terrestre principale à une cellule dans un réseau de télécommunication selon l'invention, ledit procédé comportant une étape de sélection d'un intervalle de fréquences sélectionné parmi les intervalles de fréquences [f'ᵢ; f'ᵢ₊₁] avec i variant de 1 à N-1 de sorte que ladite station terrestre principale n'est pas localisée dans une cellule associée à un faisceau auquel est attribué l'intervalle de fréquences [f_{Ns} ; f'₁].

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une représentation schématique simplifiée d'une configuration multifaisceaux;
- la figure 2 a) représente un exemple de zone de couverture composée d'une pluralité d'hexagones adjacents ;
- la figure 2 b) représente une approximation de la zone de couverture de la figure 2 a) composée d'une pluralité de faisceaux circulaires ;
- la figure 3 illustre un schéma à quatre couleurs pour la couverture de l'Europe ;
- la figure 4 illustre un plan de fréquence en bande Ka ;
- la figure 5 illustre l'utilisation d'une bande de garde sur les plans de fréquences respectives des voies descendantes et montantes en bande Ka;
- les figures 6 a) à d) représentent les couleurs des cellules dans lesquelles peuvent être localisées les stations terrestres principales dans un réseau selon l'état de la technique ;

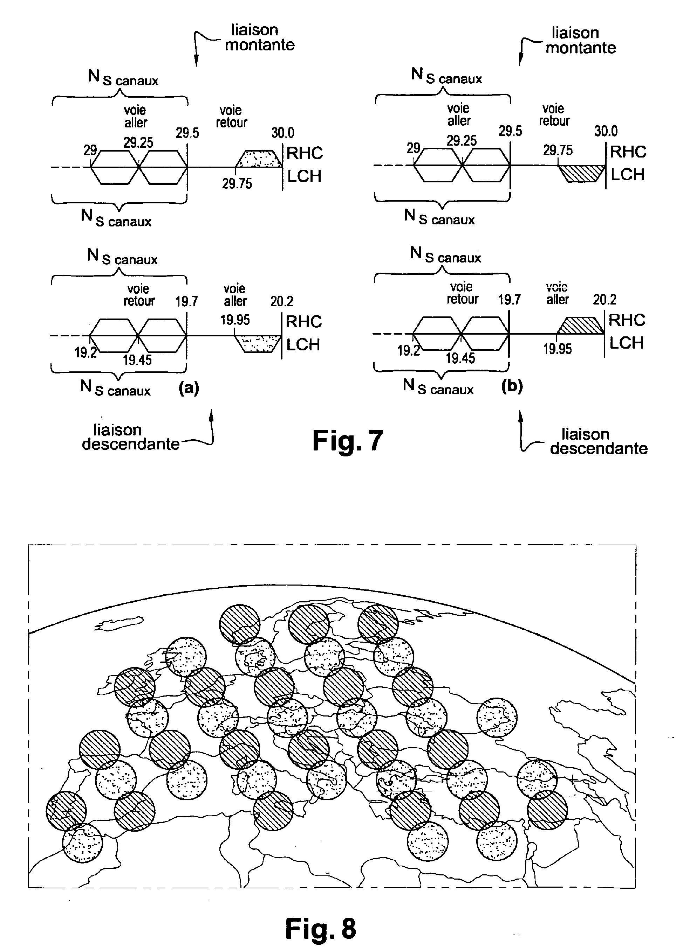

- les figures 7 a) et b) représentent les différentes localisations possibles des stations terrestres principales dans un réseau selon l'invention ;
- la figure 8 illustre les cellules potentiellement utilisables par les stations terrestres principales dans le cas de la couverture de l'Europe dans un réseau selon l'invention.

Dans toutes les figures, les éléments communs portent les mêmes numéros de référence.

Les figures 6 a) à d) représentent les différentes localisations possibles des stations terrestres principales selon les couleurs des cellules dans un réseau selon l'état de la technique. Les couleurs identifient les caractéristiques des canaux pour les terminaux dans les cellules.

Chaque cellule est associée à une des quatre couleurs suivantes :
- une première couleur jaune (figure 6 a)) correspondant en liaison montante à l'intervalle de fréquences [29.5 GHz ; 29.75 GHz] couplé à une polarisation circulaire droite RHC et en liaison descendante à l'intervalle de fréquences [19.7 GHz ; 19.95 GHz] couplé à une polarisation circulaire gauche LHC;
- une deuxième couleur bleue (figure 6 d)) correspondant en liaison montante à l'intervalle de fréquences [29.75 GHz ; 30 GHz] couplé à une polarisation circulaire gauche LHC et en liaison descendante à l'intervalle de fréquences [19.95 GHz ; 20.2 GHz] couplé à une polarisation circulaire droite RHC;

- une troisième couleur rouge (figure 6 b)) correspondant en liaison montante à l'intervalle de fréquences [29.5 GHz ; 29.75 GHz] couplé à une polarisation circulaire gauche LHC et en liaison descendante à l'intervalle de fréquences [19.7 GHz ; 19.95 GHz] couplé à une polarisation circulaire droite RHC;
- une quatrième couleur verte (figure 6 c)) correspondant en liaison montante à l'intervalle de fréquences [29.75 GHz ; 30 GHz] couplé une polarisation circulaire droite RHC et en liaison descendante à l'intervalle de fréquences [19.95 GHz ; 20.2 GHz] couplé une polarisation circulaire gauche LHC.

Le schéma à quatre couleurs est symétrique entre la voie aller et la voie retour. Une cellule est donc de la même couleur en réception et en transmission. Par contre, cette couleur ne correspond pas à la même fréquence en voie aller (réception du signal émis par le satellite entre 19.7 et 20.2 GHz) et en voie retour (émission en direction du satellite entre 29.5 et 30.0 GHz). De plus, la polarisation est inversée entre le signal émis et le signal reçu, ce qui permet l'utilisation de terminaux plus simples et moins coûteux, la séparation entre signal transmis et signal reçu se faisant par polarisation et ne nécessitant pas de filtrage spécifique.

Dans un réseau selon l'état de la technique, les stations terrestres principales peuvent ainsi occuper toutes les cellules possibles (i.e. de n'importe quelle couleur), ceci impliquant la présence d'une bande de garde BG (typiquement 250 MHz entre 29.25 GHz et 29.5 GHz pour la liaison montante en voie aller et entre 19.45 GHz et 19.7 GHz pour la liaison descendante en voie retour). Comme nous l'avons déjà mentionné, cette bande de garde occupe une partie des spectres utilisables respectivement pour l'émission des stations terrestres vers le satellite et pour la réception des signaux émis par le satellite vers les stations terrestres. Cette occupation entraîne une réduction du nombre de canaux par station terrestre principale et donc une réduction du nombre de faisceaux par station terrestre principale. Ainsi, afin de couvrir la même zone de service, une telle réduction entraîne une augmentation du nombre de stations terrestres principales.

Les figures 7 a) et b) représentent les différentes localisations possibles des stations terrestres principales selon les couleurs des cellules dans un réseau selon l'invention.

Le réseau de télécommunication selon l'invention permet l'établissement de liaisons radiofréquences entre des stations terrestres principales et des terminaux terrestres via un satellite de télécommunication multifaisceaux.

Le réseau comporte donc :
- un satellite multifaisceaux,
- une pluralité de stations terrestres, chaque station terrestre établissant :
   o une liaison montante pour l'émission en voie aller de signaux vers le satellite sur 2xNs (dans notre exemple 16 canaux avec Ns=8) canaux de liaison, chaque canal correspondant à une polarisation circulaire droite RHC ou gauche LHC et à un des huit intervalles suivants : [27.5 GHz ; 27.75 GHz] - [27.75 GHz ; 28 GHz] - [28 GHz ; 28.25 GHz] - [28.25 GHz ; 28.5 GHz] - [28.5 GHz ; 28.75 GHz] - [28.75 GHz ; 29 GHz] - [29 GHz ; 29.25 GHz] - [29.25 GHz ; 29.5 GHz] (à titre d'illustration seuls les intervalles [29 GHz ; 29.25 GHz] - [29.25 GHz ; 29.5 GHz] sont ici représentés).
   o une liaison descendante pour la réception en voie retour de signaux provenant du satellite sur 2xNs (dans notre exemple 16 canaux avec Ns=8) canaux de liaison, chaque canal correspondant à une polarisation circulaire droite RHC ou gauche LHC et à un des intervalles suivants : [17.7 GHz ; 17.95 GHz] - [17.95 GHz; 18.2 GHz] - [18.2 GHz ; 18.45 GHz] - [18.45 GHz ; 18.7 GHz] - [18.7 GHz ; 18.95 GHz] - [18.95 GHz ; 19.2 GHz] - [19.2 GHz ; 19.45 GHz] - [19.45 GHz ; 19.7 GHz] (à titre d'illustration seuls les intervalles [19.2 GHz ; 19.45 GHz] - [19.45 GHz ; 19.7 GHz] sont ici représentés).

Nous sommes ici partis d'une hypothèse de largeur de canal égale à 250 MHz ; bien entendu, cette valeur est donnée à titre purement illustratif et l'invention s'applique également à d'autres valeurs de largeur de canal.

Contrairement au réseau selon l'état de l'art, les stations terrestres principales sont ici exclusivement localisées dans :
- des cellules de couleur verte (figure 7 a)) correspondant en liaison montante à l'intervalle de fréquences [29.75 GHz ; 30 GHz] couplé à une polarisation circulaire droite RHC et en liaison descendante à l'intervalle de fréquences [19.95 GHz ; 20.2 GHz] couplé à une polarisation circulaire gauche LHC ;
- des cellules de couleur bleue correspondant en liaison montante à l'intervalle de fréquences [29.75 GHz ; 30 GHz] couplé à une polarisation circulaire gauche LHC et en liaison descendante à l'intervalle de fréquences [19.95 GHz ; 20.2 GHz] couplé à une polarisation circulaire droite RHC.

En d'autres termes, on interdit aux stations terrestres les cellules rouge et jaune de façon à ce qu'aucune station terrestre principale ne se trouve dans une cellule émettant dans l'intervalle [29.5 GHz ; 29.75 GHz] et recevant dans l'intervalle [19.7 GHz ; 19.95 GHz].

Pour mémoire, une cellule est de la même couleur en réception et en transmission. Par contre, cette couleur ne correspond pas à la même fréquence en voie aller (réception du signal émis par le satellite entre 19.7 et 20.2 GHz) et en voie retour (émission en direction du satellite entre 29.5 et 30.0 GHz). De plus, la polarisation est inversée entre le signal émis et le signal reçu.

Dès lors, il est équivalent de dire que les stations terrestres se trouvent :
- dans une cellule bleue ou verte;
- dans une cellule de polarisation circulaire droite ou gauche et associée à l'intervalle de fréquences [29.75 GHz ; 30 GHz] en liaison montante ;
- dans une cellule de polarisation circulaire droite ou gauche et associée à l'intervalle de fréquences [19.95 GHz ; 20.2 GHz] en liaison descendante.

Le fait que les cellules rouges et jaunes ne soient pas occupées permet d'utiliser avantageusement les bandes de fréquences [29.5 GHz ; 29.75 GHz] et [19.7 GHz ; 19.95 GHz] pour respectivement séparer en fréquence sans avoir recours à une bande de garde:
- le signal émis d'une station terrestre principale et le signal émis des terminaux terrestres appartenant à la même cellule de station terrestre principale vers le satellite ;
- le signal émis par le satellite à destination d'une station terrestre principale et le signal émis par le satellite à destination des terminaux terrestres appartenant à la même cellule de station terrestre principale.

En forçant la position des stations terrestres principales à deux types de cellules on réduit par deux le nombre de cellules possibles. La figure 8 illustre les cellules potentiellement utilisables (bleues ou vertes) par une station terrestre principale dans le cas de la couverture de l'Europe. On observe bien que les stations terrestres peuvent se trouver dans 40 cellules (versus les 80 nécessaires pour couvrir l'Europe représentées en figure 3).

Bien entendu, l'invention n'est pas limitée au mode de réalisation qui vient d'être décrit.

Ainsi, l'invention a été plus particulièrement décrite dans le cas de la bande Ka mais elle peut également s'appliquer à d'autres types de bande de fréquences, notamment des bandes à fréquences plus élevées telles que la bande Q/V ; l'invention s'applique de façon générale lorsque les bandes allouées pour les stations terrestres principales et pour les terminaux sont adjacentes (i.e. se touchent via une fréquence commune).

De même, on a décrit l'invention dans le cas d'un nombre Ns de canaux égal à 8 pour chaque polarisation (16 canaux au total). Il se peut qu'une partie de la bande ne soit pas utilisable, par exemple la partie allant de 17.7 à 18.45 GHz en voie retour et la partie allant de 27.5 à 28.25 GHz en voie aller : dans ce cas, le nombre de canaux Ns par polarisation est égal à 5.

En outre, même si l'invention a été plus spécifiquement décrite pour un réseau utilisant une polarisation elle s'applique également à un réseau sans polarisation.

## Revendications

1. Réseau de télécommunication pour l'établissement de liaisons radiofréquences sans recours à une bande de garde entre des stations terrestres principales et des terminaux terrestres via un satellite de télécommunication à plusieurs faisceaux, dit satellite multifaisceaux, ledit réseau comportant :
- un satellite multifaisceaux,
- une pluralité de stations terrestres, chaque station terrestre établissant une liaison avec ledit satellite sur au moins Ns canaux de liaison correspondant à Ns intervalles de fréquences [fᵢ ; fᵢ₊₁] avec i variant de 0 à Ns-1 et,
- une zone de service composée de Nc cellules comportant chacune une pluralité de terminaux terrestres, chaque cellule étant associée à un faisceau de liaison avec ledit satellite auquel est attribué un intervalle de fréquences sélectionné parmi une pluralité d'intervalles de fréquences [f'ᵢ ; f'ᵢ₊₁] avec i variant de 0 à N-1, N étant un entier strictement supérieur à 1, la fréquence f₀ étant sensiblement égale à la fréquence f_{Ns}, ou la fréquence f'_{N} étant sensiblement égale à la fréquence f₀,
chacune desdites stations terrestres principales étant localisée dans une desdites Nc cellules, ledit réseau étant **caractérisé en ce que** les cellules dans lesquelles sont localisées lesdites stations terrestres principales sont associées à un faisceau auquel est attribué un intervalle de fréquences sélectionné parmi les intervalles de fréquences:
- [f'ᵢ;f'ᵢ₊₁] avec i variant de 1 à N-1 dans le cas où la fréquence f'₀ est sensiblement égale à la fréquence f_{Ns}, de sorte qu'aucune station terrestre principale dudit réseau n'est localisée dans une cellule associée à un faisceau auquel est attribué l'intervalle de fréquences [f'₀; f'₁]·
- [f'ᵢ; f'ᵢ₊₁] avec i variant de 0 à N-2 dans le cas où la fréquence f'_{N} est sensiblement égale à la fréquence f₀, de sorte qu'aucune station terrestre principale dudit réseau n'est localisée dans une cellule associée à un faisceau auquel est attribué l'intervalle de fréquences [f'_{N-1} ; f'_{N}].

2. Réseau selon la revendication 1 **caractérisé en ce que** chaque station terrestre établit une liaison avec ledit satellite sur 2xNs canaux de liaison, les 2xNs canaux incluant :
- Ns canaux associés à une première polarisation et correspondant aux dits Ns intervalles de fréquences [fᵢ ; fᵢ₊₁] avec i variant de 0 à Ns-1 et,
- Ns canaux associés à une deuxième polarisation et correspondant aux dits Ns intervalles de fréquences [f'ᵢ; fᵢ₊₁] avec i variant de 0 à Ns-1,
chaque cellule étant associée à un faisceau auquel est attribuée une desdites première ou deuxième polarisation.

3. Réseau selon l'une des revendications précédentes **caractérisé en ce que** lesdits intervalles de fréquences appartiennent à la bande Ka.

4. Réseau selon l'une des revendications 1 à 3 **caractérisé en ce que** :
- f'₀ = f_{Ns} + f_{B} avec f_{B} ayant une valeur positive strictement inférieure à la largeur de la bande de garde ou,
- la fréquence f₀ = f_{N}.+f'_{B} avec f'_{B} ayant une valeur positive strictement inférieure à la largeur de la bande de garde.

5. Réseau selon l'une des revendications 1 à 3 **caractérisé en ce que** la fréquence f'₀ est égale à la fréquence f_{Ns} ou la fréquence f'_{N} est égale à la fréquence f₀.

6. Réseau selon la revendication 5 **caractérisé en ce que**, dans le cas de liaisons montantes, d'une part entre lesdites stations terrestres principales et ledit satellite et d'autre part entre lesdites cellules et ledit satellite, les cellules dans lesquelles sont localisées lesdites stations terrestres sont associées à un faisceau auquel est attribué l'intervalle de fréquences [29.75 GHz ; 30 GHz], aucune station terrestre dudit réseau n'étant localisée dans une cellule associée à un faisceau auquel est attribué l'intervalle de fréquences [29.5 GHz ; 29.75 GHz].

7. Réseau selon l'une des revendications 5 ou 6 **caractérisé en ce que**, dans le cas de liaisons descendantes, d'une part entre lesdites stations terrestres principales et ledit satellite et d'autre part entre lesdites cellules et ledit satellite, les cellules dans lesquelles sont localisées lesdites stations terrestres sont associées à un faisceau auquel est attribué l'intervalle de fréquences [19.95 GHz ; 20.2 GHz], aucune station terrestre dudit réseau n'étant localisée dans une cellule associée à un faisceau auquel est attribué l'intervalle de fréquences [19.7 GHz ; 19.95 GHz].

8. Réseau selon l'une des revendications 5 à 7 **caractérisé en ce que** chaque cellule est associée à une des quatre couleurs suivantes :
- une première couleur correspondant en liaison montante à l'intervalle de fréquences [29.5 GHz ; 29.75 GHz] couplé à une première polarisation et en liaison descendante à l'intervalle de fréquences [19.7 GHz ; 19.95 GHz] couplé à une deuxième polarisation inverse de ladite première polarisation.
- une deuxième couleur correspondant en liaison montante à l'intervalle de fréquences [29.75 GHz ; 30 GHz] couplé à ladite deuxième polarisation et en liaison descendante à l'intervalle de fréquences [19.95 GHz ; 20.2 GHz] couplé à ladite première polarisation;
- une troisième couleur correspondant en liaison montante à l'intervalle de fréquences [29.5 GHz ; 29.75 GHz] couplé à ladite deuxième polarisation et en liaison descendante à l'intervalle de fréquences [19.7 GHz ; 19.95 GHz] couplé à ladite première polarisation;
- une quatrième couleur correspondant en liaison montante à l'intervalle de fréquences [29.75 GHz ; 30 GHz] couplé à ladite première polarisation et en liaison descendante à l'intervalle de fréquences [19.95 GHz; 20.2 GHz] couplé à ladite deuxième polarisation,
les cellules dans lesquelles sont localisées lesdites stations terrestres étant uniquement des cellules de ladite deuxième ou quatrième couleur.

9. Réseau selon la revendication précédente **caractérisé en ce que** ladite première polarisation est une polarisation circulaire droite et ladite deuxième polarisation est une polarisation circulaire gauche.

10. Réseau selon l'une des revendications précédentes **caractérisé en ce que** le nombre Ns de canaux est égal à huit.

11. Réseau selon l'une des revendications 1 à 9 **caractérisé en ce que** le nombre Ns de canaux est égal à cinq.

12. Réseau selon l'une des revendications précédentes **caractérisé en ce que** l'entier N est égal à 2.

13. Procédé pour allouer une station terrestre principale à une cellule dans un réseau de télécommunication selon l'une quelconque des revendications précédentes, ledit procédé comportant une étape de sélection d'un intervalle de fréquences sélectionné parmi les intervalles de fréquences :
- [f'ᵢ; f'ᵢ₊₁] avec i variant de 1 à N-1 dans le cas où la fréquence f'₀ est sensiblement égale à la fréquence f_{Ns}, de sorte qu'aucune station terrestre principale dudit réseau n'est localisée dans une cellule associée à un faisceau auquel est attribué l'intervalle de fréquences [f'₀; f'₁].
- [f'ᵢ; f'ᵢ₊₁] avec i variant de 0 à N-2 dans le cas où la fréquence f N est sensiblement égale à la fréquence f₀, de sorte qu'aucune station terrestre principale dudit réseau n'est localisée dans une cellule associée à un faisceau auquel est attribué l'intervalle de fréquences [f'_{N-1}; f'_{N}].

## Claims

1. A telecommunications network for establishing radiofrequency links without recourse to a guard band between principal ground stations and ground terminals via a telecommunication satellite with several beams, called a multibeam satellite, said network comprising:
- a multibeam satellite,
- a plurality of ground stations, each ground station establishing a link with said satellite on at least Ns link channels corresponding to Ns frequency intervals [fᵢ; fᵢ₊₁] with i varying from 0 to Ns-1 and,
- a service area composed of Nc cells each comprising a plurality of ground terminals, each cell being associated with a link beam with said satellite to which is allocated a frequency interval selected from among a plurality of frequency intervals [f'ᵢ; f'_{i + 1}] with i varying from 0 to N-1, N being an integer strictly greater than 1, the frequency f'₀ being substantially equal to the frequency f_{Ns}, or the frequency f'_{N} being substantially equal to the frequency f₀,
each of said principal ground stations being located in one of said Nc cells, said network being **characterized in that** the cells in which said principal ground stations are located are associated with a beam to which is allocated a frequency interval selected from among the frequency intervals:
- [f'ᵢ; f'ᵢ₊₁] with i varying from 1 to N-1 in the case where the frequency f'₀ is substantially equal to the frequency f_{Ns}, such that no principal ground station of said network is located in a cell associated with a beam to which the frequency interval [f'₀; f'₁] is allocated.
- [f'ᵢ; f'ᵢ₊₁] with i varying from 0 to N-2 in the case where the frequency f'_{N} is substantially equal to the frequency f₀, such that no principal ground station of said network is located in a cell associated with a beam to which the frequency interval [f'_{N-1}; f'_{N}] is allocated.

2. The network according to claim 1 **characterized in that** each ground station establishes a link with said satellite on 2xNs link channels including:
- Ns channels associated with a first polarization and corresponding to said Ns frequency intervals [fᵢ; fᵢ₊₁] with i varying from 0 to Ns-1 and,
- Ns channels associated with a second polarization and corresponding to said frequency intervals Ns [f'ᵢ; fᵢ₊₁] with i varying from 0 to Ns-1,
each cell being associated with a beam to which one of said first or second polarizations is allocated.

3. The network according to one of the previous claims **characterized in that** said frequency intervals belong to the band Ka.

4. The network according to one of claims 1 to 3 **characterized in that**:
- f'₀=f_{Ns}+f_{B} with f_{B} having a positive value strictly less than the width of the guard band, or
- the frequency f₀=f_{N}+f'_{B} with f'_{B} having a positive value strictly less than the width of the guard band.

5. The network according to one of claims 1 to 3 **characterized in that** the frequency f'₀ is equal to the frequency f_{Ns} or the frequency f'_{N} is equal to the frequency f₀.

6. The network according to claim 5 **characterized in that**, in the case of uplinks, on the one hand between said principal ground stations and said satellite and on the other hand between said cells and said satellite, the cells in which said ground stations are located are associated with a beam to which the frequency interval [29.75 GHz; 30 GHz] is allocated, no ground station from said network being located in a cell associated with a beam to which the frequency interval [29.5 GHz; 29.75 GHz] is allocated.

7. The network according to one of claims 5 or 6 **characterized in that**, in the case of downlinks, on the one hand between said principal ground stations and said satellite and on the other hand between said cells and said satellite, the cells in which said ground stations are located are associated with a beam to which the frequency interval [19.95 GHz; 20.2 GHz] is allocated, no ground station of said network being located in a cell associated with a beam to which the frequency interval [19.7 GHz; 19.95 GHz] is allocated.

8. The network according to one of claims 5 to 7 **characterized in that** each cell is associated with one of the following four colors:
- a first color in uplink to the frequency interval [29.5 GHz; 29.75 GHz] coupled to a first polarization and in downlink to the frequency interval [19.7 GHz; 19.95 GHz] coupled to a second polarization opposite from said first polarization.
- a second color corresponding in uplink to the frequency interval [29.75 GHz; 30 GHz] coupled to said second polarization and in downlink to the frequency interval [19.95 GHz; 20.2 GHz] coupled to said first polarization;
- a third color corresponding in uplink to the frequency interval [29.5 GHz; 29.75 GHz] coupled to said second polarization and in downlink to the frequency interval [19.7 GHz; 19.95 GHz] coupled to said first polarization;
- a fourth color corresponding in uplink to the frequency interval [29.75 GHz; 30 GHz] coupled to said first polarization and in downlink to the frequency interval [19.95 GHz; 20.2 GHz] coupled to said second polarization,
the cells in which said ground stations are located only being cells from said second or fourth color.

9. The network according to the previous claim **characterized in that** said first polarization is a right circular polarization and said second polarization is a left circular polarization.

10. The network according to one of the previous claims **characterized in that** the number Ns of channels is equal to eight.

11. The network according to one of claims 1 to 9 **characterized in that** the number Ns of channels is equal to five.

12. The network according to one of the previous claims **characterized in that** the integer N is equal to 2.

13. A method for allocating a principal ground station to a cell in a telecommunication network according to any one of the previous claims, said method comprising a step of selecting a frequency interval selected from among the frequency intervals:
- [f'ᵢ; f'ᵢ₊₁] with i varying from 1 to N-1 in the case where the frequency f'₀ is substantially equal to the frequency f_{Ns,} such that no principal ground station of said network is located in a cell associated with a beam to which the frequency interval [f'₀; f'₁] is allocated.
- [f'ᵢ; f'ᵢ₊₁] with i varying from 0 to N-2 in the case where the frequency f'_{N} is substantially equal to the frequency f₀, such that no principal ground station of said network is located in a cell associated with a beam to which the frequency interval [f'ₙ₋₁; f'_{N}] is allocated.

## Patentansprüche

1. Fernmeldenetz zum Aufbau von Hochfrequenzverbindungen ohne Einsatz eines Schutzbandes zwischen Hauptbasistationen und Endgeräzen über einen Ferumeldesatelliten mit mehreren Strahlen, einen sogenannten Mehrstrahlsatelliten, wobei das Netz Folgendes umfasst:
- einen Mehrstrahlsatelliten,
- mehrere Easisstationen, wobei jede Basisstation auf mindestens Ns Verbindungskanälen, die Ns Frequenzintervallen [fᵢ; fᵢ₊₁] entsprechen, eine Verbindung mit dem Satelliten aufbaut, wobei i von 0 bis Ns-1 variiert, und
- einen Versorgungsbereich, der aus Nc Zellen besteht, die jeweils mehrere Endgeräte umfassen, wobei jede Zelle einem Verbindungsstrahl mit dem Satelliten zugehörig ist, dem ein unter mehreren Frequenzintervallen [f'ᵢ; f'ᵢ₊₁] ausgewähltes Frequenzintervall zugewiesen ist, wobei i von 0 bis N-1 variiert, wobei N eine Ganzzahl ist, die strikt größer als 1 ist, wobei die Frequenz f'₀ im Wesentlichen gleich der Frequenz f_{NS} ist oder die Frequenz f'_{N} im Wesentlichen gleich der Frequenz f₀ ist,
wobei jede der Hauptbasistationen in einer der Nc Zellen liegt, wobei das Netz **dadurch gekennzeichnet ist, dass** die Zellen, in denen die Hauptbasisstationen liegen, einem Strahl zugehörig sind, dem ein unter den folgenden Frequenzintervallen ausgewähltes Frequenzintervall zugewiesen ist:
- [f'ᵢ; f'ᵢ₊₁], wobei i von 1 bis N-1 variiert, wenn die Frequenz f'₀ im Wesentlichen gleich der Frequenz f_{Ns} ist, derart, dass keine Hauptbasisstation des Netzes in einer Zelle liegt, die einem Strahl zugehörig ist, dem das Frequenzintervall [f'₀; f'₁] zugewiesen ist,
- [f'ᵢ; f'ₙ₊ᵢ], wobei i von 0 bis N-2 variiert, wenn die Frequenz f'_{N} im Wesentlichen gleich der Frequenz f₀ ist, derart, dass keine Hauptbasisstation des Netzes in einer Zelle liegt, die einem Strahl zugehörig ist, dem das Frequenzintervall [f'_{N-1}; f'ₙ] zugewiesen ist.

2. Netz nach Anspruch 1, **dadurch gekennzeichnet, dass** jede Basisstation auf 2xNs verbindungskanälen eine Verbindung mit dem Satelliten aufbaut, wobei die 2xNs Kanäle Folgendes umfassen:
- Ns Kanäle, die einer ersten Polarisation zugehörig sind und den Ns Frequenzintervallen [fᵢ; fᵢ₊₁] entsprechen, wobei i von 0 bis Ns-1 variiert, und
- Ns Kanäle, die einer zweiten Polarisation zugehörig sind und den Ns Frequenzintervallen [f'ᵢ; f'ᵢ₊₁] entsprechen, wobei i von 0 bis Ns-1 variiert,
wobei jede Zelle einem Strahl zugehörig ist, dem eine der ersten oder zweiten Polarisation zugewiesen ist.

3. Netz nach einem der vorhergehenden Ansprüche, **dadurch gekennzeichnet, dass** die Frequenzintervalle zum Ka-Band gehören.

4. Netz nach einem der Ansprüche 1 bis 3, **dadurch gekennzeichnet, dass**:
- f'₀ = f_{Ns} + f_{B}, wobei f_{B} einen positiven Wert aufweist, der strikt kleiner als die Breite des Schutzbands ist, oder
- die Frequenz f₀ = f'_{N} + f'_{B} ist, wobei f'_{B} einen positiven Wert aufweist, der strikt kleiner als die Breite des Schutzbands ist.

5. Netz nach einem der Ansprüche 1 bis 3, **dadurch gekennzeichnet, dass** die Frequenz f'₀ gleich der Frequenz f_{Ns} ist oder die Frequenz f'_{N} gleich der Frequenz fo ist.

6. Netz nach Anspruch 5, **dadurch gekennzeichnet, dass** im Fall von Aufwärtsstrecken zwischen einerseits den Hauptbasisstationen und dem Satelliten und andererseits zwischen den Zellen und dem Satelliten, die Zellen, in denen die Basistationen liegen, einem Strahl zugehörig sind, dem das Frequenzintervall [29.75 GHz; 30 GHz] zugewiesen ist, wobei keine Basisstation des Netzes in einer Zelle liegt, die einem Strahl zugehörig ist, dem das Frequenzintervall [29.5 GHz; 29.75 GHz] zugewiesen ist.

7. Netz nach einem der Ansprüche 5 oder 6, **dadurch gekennzeichnet, dass** im Fall von Abwärtsstrecken zwischen einerseits den Hauptbasisstationen und dem Satelliten und andererseits zwischen den Zellen und dem Satelliten, die Zellen, in denen die Basisstationen liegen, einem Strahl zugehörig sind, dem das Frequenzintervall [19.95 GHz; 20.2 GHz] zugeweisen ist, wobei keine Basisstation des Netzes in einer Zelle liegt, die einem Strahl zugehörig ist, dem das Frequenzintervall [19.7 GHz; 19.95 GHz] zugewiesen ist.

8. Netz nach einem der Ansprüche 5 bis 7, **dadurch gekennzeichnet, dass** jede Zelle einer der vier folgenden Farben zugehörig ist:
- einer ersten Farbe, die bei der Aufwärtsstrecke dem Frequenzintervall [29.5 GHz; 29.75 GHz], das an eine erste Polarisation gekoppelt ist, und bei der Abwärtsstrecke dem Frequenzintervall [19.7 GHz; 19.95 GHz] entspricht, das an eine zweite Polarisation gekoppelt ist, die der ersten Polarisation entgegengesetzt ist,
- einer zweiten Farbe, die bei der Aufwärtsstrecke dem Frequenzintervall [29.75 GHz; 30 GHz], das an die zweite Polarisation gekoppelt ist, und bei der Abwärtsstrecke dem Frequenzintervall [19.95 GHz; 20.2 GHz] entspricht, das an die erste Polarisation gekoppelt ist;
- einer dritten Farbe, die bei der Aufwärtsstrecke dem Frequenzintervall [29.5 GHz; 29.75 GHz], das an die zweite Polarisation gekoppelt ist, und bei der Abwärtsstrecke dem Frequenzintervall [19.7 GHz; 19.95 GHz] entspricht, das an die erste Polarisation gekoppelt ist;
- einer vierten Farbe, die bei der Aufwärtsstrecke dem Frequenzintervall [29.75 GHz; 30 GHz], das an die erste Polarisation gekoppelt ist, und bei der Abwärtsstrecke dem Frequenzintervall [19.95 GHz; 20.2 GHz] entspricht, das an die zweite Polarisation gekoppelt ist,
wobei die Zellen, in denen die Basisstationen liegen, einzig Zellen der zweiten oder vierten Farbe sind.

9. Netz nach dem vorhergehenden Anspruch, **dadurch gekennzeichnet, dass** die erste Polarisation eine rechtsdrehende Zirkularpolarisation ist und die zweite Polarisation eine linksdrehende Zirkularpolarisation ist.

10. Netz nach einem der vorhergehenden Ansprüche, **dadurch gekennzeichnet, dass** die Anzahl Ns der Kanäle gleich acht ist.

11. Netz nach einem der Ansprüche 1 bis 9, **dadurch gekennzeichnet, dass** die Anzahl Ns der Kanäle gleich fünf ist.

12. Netz nach einem der vorhergehenden Ansprüche, **dadurch gekennzeichnet, dass** die Ganzzahl N gleich 2 ist.

13. Verfahren zum Zuteilen einer Hauptbasisstation zu einer Zelle in einem Fernmeldenetz nach einem der vorhergehenden Ansprüche, wobei das Verfahren einen Schritt der Auswahl eines unter den folgenden Frequenzintervallen ausgewählten Frequenzintervalls umfasst:
- [f'ᵢ; f'ᵢ₊₁], wobei i von 1 bis N-1 variiert, wenn die Frequenz f'₀ im Wesentlichen gleich der Frequenz f_{Ns} ist, derart, dass keine Hauptbasisstation des Netzes in einer Zelle liegt, die einem Strahl zugehörig ist, dem das Frequenzintervall [f'₀; f'₁] zugewiesen ist,
- [f'ᵢ; f'ᵢ₊₁], wobei i von 0 bis N-2 variiert, wenn die Frequenz f'_{N} im Wesentlichen gleich der Frequenz f₀ ist, derart, dass keine Hauptbasisstation des Netzes in einer Zelle liegt, die einem Strahl zugehörig ist, dem das Frequenzintervall [f'ₙ₋₁; f'_{N}] zugewiesen ist.
